# EUROPEAN PATENT APPLICATION

(11) **EP 2 503 542 A1**
(43) Date of publication of application: **26.09.2012**
(21) Application number: 10830263.9
(22) Date of filing: 15.11.2010
(51) Int. Cl.: G09G 5/00, G06F 3/00, H04N 5/30

(54) **METHOD AND DEVICE FOR DESIGNATING AND ARRANGING PORTIONS OF A DISPLAY**

(30) Priority: 16.11.2009 RU 2009142181
(71) Applicant: Miroshnichenko, Vladimir Vitalievich, Moskovskaya obl. 140003 (RU); Pilkin, Vitaly Evgenievich, Moscow 127081 (RU)
(72) Inventor: Miroshnichenko, Vladimir Vitalievich, Moskovskaya obl. 140003 (RU); Pilkin, Vitaly Evgenievich, Moscow 127081 (RU)
(74) Representative: Hersina, Günter
(86) International application number: PCT/RU2010/000669
(87) International publication number: WO 2011/059367

(57) **Abstract**

The invention relates to the field of electronics and is intended to enhance the functional capabilities and technical characteristics of an electronic device through the designation and arrangement of portions of a display on the electronic device. A portion or portions of a touch sensitive or non-touch sensitive display and/or a touch sensitive portion and/or portions of a touch sensitive portion of a display are designated by distinguishing the portion or portions of the display from another portion or portions of the display. A portion or portions of the display are distinguished when the display is switched off or independently of whether the display is functioning or not. The display or a portion of the display of an electronic device is arranged on two or three or four or five or more than five external sides of the housing of an electronic device.

## Description

### FIELD OF THE INVENTION

A group of three inventions relates to electronic devices and is aimed to improve functional options and technical features of an electronic device due to designation and arrangement of display parts on the electronic device.

### BACKGROUND OF THE INVENTION

In regards to the first and second inventions, which relate to the method of designation of display parts and device for the method embodiment. In general, a display is deemed any surface, displaying alphanumeric and/or graphic data, e.g., a computer monitor, a display board, a TV-screen, a mobile phone screen and so on. Displays may be touch screens (sensor type) and non-sensor type displays. Touch screens include screens (monitors) of an electronic device, where functions of an electronic device are controlled (managed) through a contact movement of a finger and/or a stylus over the surface of the touch screen. For more details see http://www.se900.ru/forum/index.php?showtopic=323. Non-sensor displays include screens (monitors), where functions of an electronic device controlling (managing) through a contact movement of a finger and/or a stylus over the display surface is impossible. Such electronic devices with non-sensor displays are well known, e.g., a mobile phone NOKIA N73; for more details see http://www.nokia.ru/products/phones/n73/specifications.

It is also known that technology of touch screens and non sensor type screens manufacture allows a part or some parts of the display are functioning as a touch screen, and the rest part or parts of the same display are functioning as a non-sensor display. For more details see http://www.se900.ru/forum/index.php?showtopic=323 or http://www.beetouch.ru/docs.php

There are also known electronic devices equipped with display, wherein device functions controlling (managing) is carried out through a display, but the display is a non-sensor type, e.g., Microsoft Surface (more details you may find at http://www.microsoft.com/surface/Pages/Product/WhatIs.aspx).

The mentioned technical solutions have the following disadvantages:
- A user is not aware which part of the display is a touch-screen, and which part is a non-sensor type;
- A user of a non-sensor display is not aware, which part of the display is available for touch manipulations.

Any prior arts close or similar to the nature of the first and second inventions described herein have not been found.

In regards to the third invention: it is known a display arranged only on one side of an electronic device body. For more details see http://www.nokia.ru/. The disadvantage of the said electronic device is that the display cannot be arranged on several sides of said electronic device at once, which could improve functional options and technical features of said electronic device. Any prior arts close or similar to the nature of the third invention described herein have not been found.

### OBJECTIVES AND DESCRIPTION OF THE INVENTION

The object of the first and the second invention is to improve functional options and technical features of an electronic device by applying the method of designation of display part or parts and device for the method embodiment.

The object of the third invention is to improve functional options and technical features of an electronic device by arranging display on various sides of an electronic device body.

For proper understanding and interpretation of the text and claims described herein the following terms are used:
*Display* is a display, representing itself a sensor or a non sensor type flexible or non flexible or partially flexible display or a flexible or a non flexible or a partially flexible touch screen.
*Transformation of an electronic device* is a change of mutual position of a side or a part of the side of an electronic device body relative to another side or a part of the side of the said electronic device body.
*Partially sensor display* is a display with at least one sensor part and at least one non sensor part, or a display, where at least one of its parts can change its functional operation from a touch screen into a non sensor type display or vice versa.
*Partially flexible display* isa display, comprising at least one flexible part and at least one non flexible part.
*Indicative virtual object or indicative virtual objects* is a certain virtual object or some virtual objects, which designate a part or some parts of a display or by means of which a part or parts of a display can be designated on the screen; a virtual indicative object is displayed fully or partially on that part of a display, which is designated by said object, or it can be displayed outside that display part, which is designated by said object.
*Difference in roughness of the display parts* isa difference between resistances of the display parts to a finger touching and moving on it in all directions or at least one direction, all other conditions being equal. And as used herein the term a «rougher surface» implies that the said surface has higher resistance to a finger moving on it in all directions or at least one direction, all other conditions being equal, relative to the surface or surfaces it is compared to. And as used herein the term a «less rough surface» implies that the said surface has lower resistance to a finger moving on it in all or at least one direction, all other conditions being equal, relative to the surface or surfaces it is compared to.

The above mentioned technical result according to the first invention is achieved as follows:
1.1. A part or parts of a touch screen display or a non sensor type display and/or a touch screen part of a display and/or touch screen parts of a display are designated differently from another part or parts of the display, wherein: a) displayed on an display an indicative virtual object or objects designate on the display part or parts to be designated on the display, and/or b) a surface or a part of a surface at least of one designated part of a display reflects the incident light otherwise than a surface or a part of the surface at least of one another display part, and/or c) tactile perception is different when the finger touches a surface or part of a surface at least of one part of the designated display and when the finger touches another surface or part of another surface at least of one another part of the display, and/or d) a surface or part of a surface at least of one part of the designated display has a convex shape or a concave shape or at least one part of the surface of each designated display parts has a convex shape and at least one part of the surface of each designated display parts has a concave shape, herewith said shape is constant or may be transformed into another shapes, and/or e) one or several designated display parts has/have higheror lower torsional stiffness than another part or parts of a flexible or a partially flexible display, and/or f) at least one designated display part visually differs from another display part or parts, and/or g) transparency level at least of one display part differs from at least one another display part, and/or h) when the display is functioning, brightness at least of one designated display part is higher or lower than at least one another display part; display part or parts designation as described in the sub-clauses «b» - «g» is made either with a switched off display or regardless of the display ON/OFF condition.

The above mentioned technical result according to the second invention is achieved as follows:
2.1. An embodiment of a display is such that: a) at least one part of a display surface reflects the incident light otherwise than at least one another part of the display surface and/or b) at least one of the display parts has a rough or ribbed surface and/or c) the temperature of the surface or a part of the surface at least of one of display parts is different from the temperature of the surface or part of the surface at least of one another display parts and/or d) at least one part of a display is transparent or semi-transparent and/or e) at least one display part has a flexible part or parts and a non flexible part or parts and/or f) torsional stiffness at least of one of display part is higher than at least one another display part, herewith said display is flexible or the display has a flexible part or parts and a non flexible part or parts and/or e) the sensor part of a partially touch screen display or the sensor surface or surfaces of the non sensor part of a partially touch screen display or a part or some parts of the touch screen and/or the non sensor surfaces of a partially touch screen display or a part or some parts of a touch screen or a part or some parts of a non sensor display have a convex shape and/or a part or some parts of a touch screen or a partially touch screen display or a non sensor display have a concave shape, herewith the said shape is constant or may be transformed into some other shapes.
2.2. If there are at least two display parts with rough surface, the surface at least of one display part may be rougher or less rough as compared to the surface at least of one another display part.
2.3. The convex and/or the concave shapes of display part may be arranged to allow changing their size and/or configuration and/or location on the display.
2.4. The size and/or configuration and/or location of the convex and/or the concave display part may be changed due to display transformation.
2.5. The surface or a part of the surface at least of one convex display part and/or the surface or a part of the surface at least of one concave display part may be rough or ribbed or may form a pattern or a symbol or an alphabet character or a numeric character.
2.6. Higher torsional stiffness of one display part or parts as compared to another display part or parts may be obtained due to a larger display thickness of the display part or parts as compared to another display part or parts and/or due to a material or materials used in the said display parts, which are different from materials used in another display parts.
2.7. At least one display part may have zero brightness during display operation.

The above mentioned technical result according to the third invention is achieved as follows:
3.1. A display or a part of a display of an electronic device is arranged on two or three or four or five or more than five outer sides of the electronic device, representing a monitor or a mobile phone or a smart phone or a communicator or a notebook or a netbook or a tablet computer or an electronic book or a multimedia device or a game console or a game system or a remote control device or a camcorder or a digital camera or a navigator or any other electronic device with a display, herewith the said display is of a sensor or a non-sensor type or a partially of sensor type; herewith the said display is flexible or non flexible or partially flexible; herewith the said display covers fully or partially each side of the electronic device, where it is arranged; herewith if the display or a part of the display are arranged only on two outer sides of the electronic device body, then these two sides are lateral sides of the electronic device body.
3.2. In case the display or a part of the display of an electronic device is arranged on three sides of the electronic device body, these sides may be as follows: a) outer face side of the electronic device body, outer side of the electronic device body, which is opposite to the face side of the electronic device body, one outer lateral side of the electronic device body, herewith if the length of the electronic device body is different from its width, then this lateral side is understood as one of the long or short lateral side of the electronic device body or b) three outer lateral sides of the electronic device body or c) outer face side of the electronic device body or outer side of the electronic device body, which is opposite to the face side of the electronic device body, and two outer lateral sides of the electronic device body, herewith said lateral sides are adjacent or not adjacent to each other, or d) one internal or outer lateral side of the electronic device body and two sides, adjacent to the said lateral side of the electronic device body.
3.3. In case the display or a part of the display of an electronic device is arranged on four sides of the electronic device body, these sides may be as follows: 1) outer face side of the electronic device body, outer side, which is opposite to the outer face side of the electronic device body, and two outer lateral sides of the electronic device body, herewith if the length of the electronic device body is different from its width, then, either the said outer lateral sides of the electronic device body are understood as long or short lateral sides, or one of the said lateral sides is understood as a long lateral side of the electronic device body, and the other (second) side is understood as a short lateral side of the electronic device body, or 2) four outer lateral sides of the electronic device body or 3) outer face side of the electronic device body or outer side, which is opposite to the outer face side of the electronic device body, and three outer lateral sides of the electronic device body.
3.4. A part or parts of a touch screen display or a non sensor type display and/or a touch screen part of a display and/or touch screen parts of a display may be designated differently from another part or parts of the display, wherein: a) displayed on a display an indicative virtual object or objects designate on the display part or parts to be designated on the display, and/or b) a surface or a part of a surface at least of one designated part of a display reflects the incident light otherwise than a surface or a part of the surface at least of one another display part, and/or c) tactile perception is different when the finger touches a surface or part of a surface at least of one part of the designated display and when the finger touches another surface or part of another surface at least of one another part of the display, and/or d) a surface or part of a surface at least of one part of the designated display has a convex shape or a concave shape or at least one part of the surface of each designated display parts has a convex shape and at least one part of the surface of each designated display parts has a concave shape, herewith said shape is constant or may be transformed into another shapes, and/or e) one or several designated display parts has/have higheror lower torsional stiffness than another part or parts of a flexible or a partially flexible display, and/or f) at least one designated display part visually differs from another display part or parts, and/or g) transparency level at least of one display part differs from at least one another display part, and/or h) when the display is functioning, brightness at least of one designated display part is higher or lower than at least one another display part; display part or parts designation as described in the sub-clauses «b» - «g» is made either with a switched off display or regardless of the display ON/OFF condition.
3.5. The display or a part of the display may be non-removable or partially or fully removable.
3.6. The display may be partially or fully transparent or partially or fully semi-transparent.
3.7. Mutual position at least of two display parts may be changeable or constant.
3.8. Mutual position of display parts may be changed via transformation of the electronic device.
3.9. When the display parts change their mutual position, then, location of displaying at least of one virtual symbol and/or at least of one virtual object and/or the method of their displaying may be changed.
3.10. If the display is of a sensor type, the touch-screen display part or part or parts of the touch-screen display may have higher torsional stiffness as compared to other parts of the display.
3.11. Higher torsional stiffness of some display part or parts as compared to the other display parts may be obtained due to a larger display thickness in this part or parts of the display, as compared to the other display parts and/or due to a material or materials used in the said display parts, which are different form materials used in the other display parts.
3.12. If some part of the display is placed on the outer side of the electronic device body, the other part of the display may be arranged outside and/or inside the body of the electronic device.
3.13. The part of the display arranged inside the electronic device body may be rolled up either wholly or partially and then unrolled either wholly or partially; when the display part is unrolling the said part of the display may come out of the device inner part completely or partially.
3.14. The part of the display arranged inside the electronic device body may be placed either wholly or partially at least on one of the inner sides of the electronic device body; herewith part of the display: a) may be attached to some mechanisms of the electronic device , e.g., to a spring, installed inside the electronic device body, or may be attached to one internal surface of the device and besides said part of the display may be removable or non-removable or c) may not be attached to the internal surface of the electronic device body and to some mechanisms of said device; when the display part is taken out from the electronic device body the above mentioned part may come out of the inner side of the electronic device body either completely or partially.
3.15. Location on the display at least of one virtual object may be changed when visible display surface area is enlarged or reduced and/or when the operating part area of the display is changed.
3.16. When the visible part of the display surface area is enlarged or reduced and/or the operating part of the display is modified the size at least of one virtual object may be changed.
3.17. The display or a part of the display may be of rectangular or square shape or any other known shape, different from the above mentioned shapes.

### EMBODIMENT OF THE INVENTION

The embodiments of the three inventions described herein may be put into practice due to implementation of technical solutions, software and technical means known from the background art.

### APPLICATIONS OF THE INVENTION

The embodiments of the first and the second inventions described herein may be widely applicable in those displays, where at least one part differs from the other.

The embodiments of the third invention may be applicable in electronic devices with displays.

## Claims

1. The method of designation of parts of a display, representing a touch screen display or a non sensor type display, a flexible or non flexible or a partially flexible display or a flexible or non flexible or a partially flexible partially touch screen display, is **characterized in that** a part or parts of a touch screen display or a non sensor type display and/or a touch screen part of a display and/or touch screen parts of a display are designated differently from another part or parts of the display, wherein: a) displayed on an display an indicative virtual object or objects designate on the display part or parts to be designated on the display, and/or b) a surface or a part of a surface at least of one designated part of a display reflects the incident light otherwise than a surface or a part of the surface at least of one another display part, and/or c) tactile perception is different when the finger touches a surface or part of a surface at least of one part of the designated display and when the finger touches another surface or part of another surface at least of one another part of the display, and/or d) a surface or part of a surface at least of one part of the designated display has a convex shape or a concave shape or at least one part of the surface of each designated display parts has a convex shape and at least one part of the surface of each designated display parts has a concave shape, herewith said shape is constant or may be transformed into another shapes, and/or e) one or several designated display parts has/have higher or lower torsional stiffness than another part or parts of a flexible or a partially flexible display, and/or f) at least one designated display part visually differs from another display part or parts, and/or g) transparency level at least of one display part differs from at least one another display part, and/or h) when the display is functioning, brightness at least of one designated display part is higher or lower than at least one another display part; display part or parts designation as described in the sub-clauses «b» - «g» is made either with a switched off display or regardless of the display ON/OFF condition.

2. A device for designation of parts of a display, representing a touch screen display or a non sensor type display, a flexible or non flexible or a partially flexible display or a flexible or non flexible or a partially flexible partially touch screen display, is **characterized in that** an embodiment of a display is such that: a) at least one part of a display surface reflects the incident light otherwise than at least one another part of the display surface and/or b) at least one of the display parts has a rough or ribbed surface and/or c) the temperature of the surface or a part of the surface at least of one of display parts is different from the temperature of the surface or part of the surface at least of one another display parts and/or d) at least one part of a display is transparent or semi-transparent and/or e) at least one display part has a flexible part or parts and a non flexible part or parts and/or f) torsional stiffness at least of one of display part is higher than at least one another display part, herewith said display is flexible or the display has a flexible part or parts and a non flexible part or parts and/or e) the sensor part of a partially touch screen display or the sensor surface or surfaces of the non sensor part of a partially touch screen display or a part or some parts of the touch screen and/or the non sensor surfaces of a partially touch screen display or a part or some parts of a touch screen or a part or some parts of a non sensor display have a convex shape and/or a part or some parts of a touch screen or a partially touch screen display or a non sensor display have a concave shape, herewith the said shape is constant or may be transformed into some other shapes.

3. The device according to claim 2, wherein if there are at least two display parts with rough surface, the surface at least of one display part is rougher or less rough as compared to the surface at least of one another display part.

4. The device according to claim 2, wherein the convex and/or the concave shapes of display part are arranged to allow changing their size and/or configuration and/or location on the display.

5. The device according to claim 2 or 4, wherein the size and/or configuration and/or location of the convex and/or the concave display part is changed due to display transformation.

6. The device according to claim 2, wherein the surface or a part of the surface at least of one convex display part and/or the surface or a part of the surface at least of one concave display part is rough or ribbed or forms a pattern or a symbol or an alphabet character or a numeric character.

7. The device according to claim 2, wherein higher torsional stiffness of one display part or parts as compared to another display part or parts is obtained due to a larger display thickness of the display part or parts as compared to another display part or parts and/or due to a material or materials used in the said display parts, which are different from materials used in another display parts.

8. The device according to claim 2, wherein at least one display part has zero brightness during display operation.

9. The method of arrangement of parts of a display is **characterized in that** a display or a part of a display of an electronic device is arranged on two or three or four or five or more than five outer sides of the electronic device, representing a monitor or a mobile phone or a smart phone or a communicator or a notebook or a netbook or a tablet computer or an electronic book or a multimedia device or a game console or a game system or a remote control device or a camcorder or a digital camera or a navigator or any other electronic device with a display, herewith the said display is of a sensor or a non-sensor type or a partially of sensor type; herewith the said display is flexible or non flexible or partially flexible; herewith the said display covers fully or partially each side of the electronic device, where it is arranged; herewith if the display or a part of the display are arranged only on two outer sides of the electronic device body, then these two sides are lateral sides of the electronic device body.

10. The method according to claim 9, wherein in case the display or a part of the display of an electronic device is arranged on three sides of the electronic device body, these sides are as follows:
a) outer face side of the electronic device body, outer side of the electronic device body, which is opposite to the face side of the electronic device body, one outer lateral side of the electronic device body, herewith if the length of the electronic device body is different from its width, then this lateral side is understood as one of the long or short lateral side of the electronic device body or
b) three outer lateral sides of the electronic device body or c) outer face side of the electronic device body, outer side of the electronic device body, which is opposite to the face side of the electronic device body, two outer lateral sides of the electronic device body, herewith said lateral sides are adjacent or not adjacent to each other, or d) one internal or outer lateral side of the electronic device body and two sides, adjacent to the said lateral side of the electronic device body.

11. The method according to claim 9, wherein in case the display or a part of the display of an electronic device is arranged on four sides of the electronic device body, these sides are as follows: 1) outer face side of the electronic device body, outer side, which is opposite to the outer face side of the electronic device body, and two outer lateral sides of the electronic device body, herewith if the length of the electronic device body is different from its width, then, either the said outer lateral sides of the electronic device body are understood as long or short lateral sides, or one of the said lateral sides is understood as a long side surface of the electronic device body, and the other (second) side is understood as a short side surface of the electronic device body, or 2) four outer lateral sides of the electronic device body or 3) outer face side of the electronic device body or outer side, which is opposite to the outer face side of the electronic device body, and three outer lateral sides of the electronic device body.

12. The method according to claim 9, wherein a part or parts of a touch screen display or a non sensor type display and/or a touch screen part of a display and/or touch screen parts of a display is designated differently from another part or parts of the display, wherein: a) displayed on a display an indicative virtual object or objects designate on the display part or parts to be designated on the display, and/or b) a surface or a part of a surface at least of one designated part of a display reflects the incident light otherwise than a surface or a part of the surface at least of one another display part, and/or c) tactile perception is different when the finger touches a surface or part of a surface at least of one part of the designated display and when the finger touches another surface or part of another surface at least of one another part of the display, and/or d) a surface or part of a surface at least of one part of the designated display has a convex shape or a concave shape or at least one part of the surface of each designated display parts has a convex shape and at least one part of the surface of each designated display parts has a concave shape, herewith said shape is constant or may be transformed into another shapes, and/or e) one or several designated display parts has/have higheror lower torsional stiffness than another part or parts of a flexible or a partially flexible display, and/or f) at least one designated display part visually differs from another display part or parts, and/or g) transparency level at least of one display part differs from at least one another display part, and/or h) when the display is functioning, brightness at least of one designated display part is higher or lower than at least one another display part; display part or parts designation as described in the sub-clauses «b» - «g» is made either with a switched off display or regardless of the display ON/OFF condition.

13. The method according to claim 9, wherein the display or a part of the display is non-removable or partially or fully removable.

14. The method according to claim 9, wherein the display is partially or fully transparent or partially or fully semi-transparent.

15. The method according to claim 9, wherein mutual position at least of two display parts is changeable or constant.

16. The method according to claim 15, wherein mutual position of display parts is changed via transformation of the electronic device.

17. The method according to claim 15, wherein when the display parts change their mutual position, then, location of displaying at least of one virtual symbol and/or at least of one virtual object and/or the method of their displaying is changed.

18. The method according to claim 9, wherein if the display is of a sensor type, the touch-screen display part or part or parts of the touch-screen display has higher torsional stiffness as compared to other parts of the display.

19. The method according to claim 12 or 18, wherein higher torsional stiffness of some display part or parts as compared to the other display parts is obtained due to a larger display thickness in this part or parts of the display, as compared to the other display parts and/or due to a material or materials used in the said display parts, which are different form materials used in the other display parts.

20. The method according to claim 9, wherein if some part of the display is placed on the outer side of the electronic device body, the other part of the display is arranged outside and/or inside the body of the electronic device.

21. The method according to claim 20, wherein the part of the display arranged inside the electronic device body is rolled up either wholly or partially and then is unrolled either wholly or partially; when the display part is unrolling the said part of the display comes out of the device inner part completely or partially.

22. The method according to claim 20, wherein the part of the display arranged inside the electronic device body is placed either wholly or partially at least on one of the inner sides of the electronic device body; herewith part of the display: a) is attached to some mechanisms of the electronic device , e.g., to a spring, installed inside the electronic device body, or may be attached to one internal surface of the device and besides said part of the display may be removable or non-removable or c) is not attached to the internal surface of the electronic device body and to some mechanisms of said device; when the display part is taken out from the electronic device body the above mentioned part comes out of the inner side of the electronic device body either completely or partially.

23. The method according to claim 21 or 22, wherein location on the display at least of one virtual object is changed when visible display surface area is enlarged or reduced and/or the operating part of the display is changed.

24. The method according to claim 21 or 22, wherein when the visible part of the display surface area is enlarged or reduced and/or the operating part of the display is modified the size at least of one virtual object is changed.

25. The method according to claim 10 or 11, wherein the display or a part of the display is of rectangular or square shape or any other known shape different from the above mentioned shapes.
